# EUROPEAN PATENT APPLICATION

(11) **EP 4 169 976 A1**
(43) Date of publication of application: **26.04.2023**
(21) Application number: 21203415.1
(22) Date of filing: 19.10.2021
(51) Int. Cl.: C08K 3/22, C08K 5/132, C08K 5/3475, C08K 5/42, H01B 3/44, C08K 5/00, C08K 5/134

(54) **POLYETHYLENE COMPOSITION FOR CABLE INSULATIONS WITH IMPROVED UV STABILITY**

(71) Applicant: Borealis AG, 1020 Vienna (AT)
(72) Inventor: Gschneidtner, Tina, 44486 Stenungsund (SE); Sultan, Bernt-Åke, 44486 Stenungsund (SE)
(74) Representative: Maiwald GmbH

(57) **Abstract**

The present invention relates to a polyolefin composition comprising a cross-linkable polyolefin with hydrolysable silane groups, an acidic silanol condensation catalyst, titanium dioxide, and at least one UV stabilizer according to formula (I), (II) and/or (III), an article comprising such a composition and the use of such as composition for the production of an article.

## Description

The present invention relates to a polyolefin composition comprising a cross-linkable polyolefin with hydrolysable silane groups, an acidic silanol condensation catalyst, titanium dioxide, and at least one UV stabilizer according to formula (I), (II) and/or (III), an article comprising such a composition and the use of such a composition for the production of an article.

### Technical Background

It is known to cross-link polyolefins by means of additives as this improves the properties of the polyolefin such as mechanical strength and chemical heat resistance. Cross-linking may be performed by condensation of silanol groups contained in the polyolefin which can be obtained by hydrolyzing silane groups. A silane compound can be introduced as a cross-linkable group e.g. by grafting the silane compound onto a polyolefin, or by copolymerization of olefin monomers and silane group containing monomers. Such techniques are known for example from US 4,413,066, US 4,297,310, US 4,351,876, US 4,397,981, US 4,446,283 and US 4,456,704.

For hydrolyzing silane groups of polyolefins, a silanol condensation catalyst is usually used. Conventional catalysts are for example tin-organic compounds such as dibutyl tin dilaurate (DBTDL). It is further known that the cross—linking process advantageously is carried out in the presence of acidic silanol condensation catalysts. In contrast to the conventional tin-organic catalysts the acidic catalysts allow cross-linking to quickly take place already at room temperature and with no risk to release tin organic compounds to the environment. Such acidic silanol condensation catalysts are disclosed for example in WO 95/17463. The content of this document is enclosed herein by reference.

However, it is known that acidic silanol condensation catalysts react with UV stabilizers typically used in polymer applications in the prior art so that on the one hand protection from damages derived from ultraviolet rays and on the other hand the cure is killed. Therefore, polymer compositions, which are cross-linked by acidic silanol condensation catalysts show minor UV resistance and cannot be used for applications where UV resistant formulations are required like installation cables, cable de facade, films and outdoor pipes.

Also pigments can be used as UV stabilizers for polyolefin compositions cross-linkable by acidic silanol condensation catalysts. Carbon black, however, alters the colour of the polyolefin compositions to black, which is not wanted in several applications. Titanium dioxide improves the colour coverage of a processed article and makes said article more opaque. However, certain titanium dioxide species deactivate the cross-linking ability of acidic silanol condensation catalysts and are not compatible with the technology of cross-linking polyolefins with hydrolysable silane groups by means of an acidic silanol condensation catalyst.

WO 2021/028492 A1 discloses several groups of UV stabilizers, which do not strongly interfere with acidic silanol condensation catalysts.

WO 2009/080222 A1 discloses several species of titanium dioxide, which do not strongly interfere with acidic silanol condensation catalysts.

There is, however, still a need in the art for improved UV stability of polyolefin compositions which are cross-linkable in the presence of an acidic silanol condensation catalyst without interfering the cross-linking reaction.

In the present invention it has surprisingly been found that a polyolefin composition comprising a cross-linkable polyolefin with hydrolysable silane groups, an acidic silanol condensation catalyst, titanium dioxide, and at least one UV stabilizer according to formula (I), (II) and/or (III)show improved UV stability together with a good cross-linking performance.

### Summary of the invention

The present invention relates to a polyolefin composition comprising
(A) a cross-linkable polyolefin with hydrolysable silane groups
(B) an acidic silanol condensation catalyst
(C) titanium dioxide, and
(D) at least one UV stabilizer selected from UV stabilizers according to one or more of formula (I), (II) and/or (III) 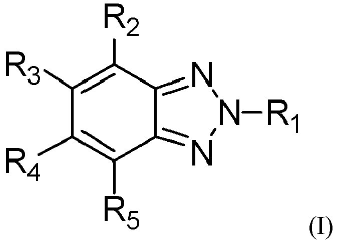
with
R₁ being a substituted or non-substituted hydrocarbon residue with at least 6 carbon atoms; and
R₂, R₃, R₄ and R₅ independently being the same or different substituted or non-substituted hydrocarbon residues, hydrogen atoms or hetero atoms;

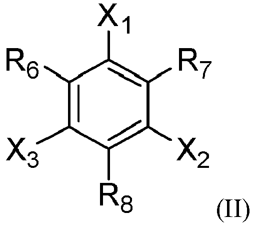

with
R₆ and R₇ being independently the same or different non—substituted or substituted aliphatic or aromatic hydrocarbon residues which independently may comprise hetero atoms, with R₈ being any substituent, and with X₁, X₂, and X₃ independently being H or OH, with the proviso that at least one of X₁, X₂ and X₃ is OH; 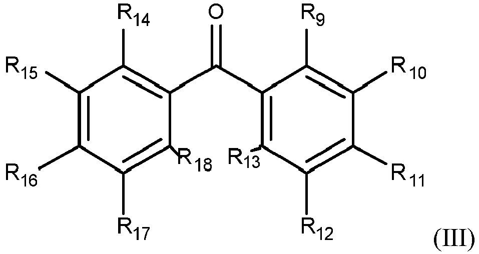 with
R₉ to R₁₈ being any substituent, preferably R₉ to R₁₈ being independently the same or different hetero atoms, substituted or non-substituted hydrocarbon residues, which may comprise hetero atoms, or hydrogen atoms with the proviso that at least one of R₉ to R₁₈ is OH;
more preferably R₉ to R₁₈ being independently the same or different hetero atoms, substituted or non-substituted hydrocarbon residues, which may comprise hetero atoms, or hydrogen atoms with the proviso that at least one of R₉ to R₁₃ is OH.

Further, the present invention relates to an article comprising the polyolefin composition as described above or below such as a pipe, a wire, a cable or a film, more preferably a cable, most preferably a low voltage cable.

Still further, the present invention relates to the use of comprising the polyolefin composition as described above or below for the production of an article, preferably the production of a film, a layer of a wire or a layer of a cable, most preferably the insulation layer of a low voltage cable.

### Brief description of the figures

Figure 1 shows the cross-linking speed of the tapes of inventive examples IE1-IE6, reference examples RE1 and RE2 and comparative example CE1 at ambient conditions (50% RH, 23°C) over 14 hours in a graph of elongation over time.
Figure 2 shows the UV stability of the tapes of inventive examples IE1-IE6, reference examples RE1 and RE2 and comparative example CE1 as elongation at break over weathering time.
Figure 3 shows the UV stability of the tapes of inventive examples IE1 and IE2, reference example RE2 and comparative examples CE1 and CE2 as elongation at break over weathering time.

### Definitions

Where the term "comprising" is used in the present description and claims, it does not exclude other non-specified elements of major or minor functional importance. For the purposes of the present invention, the term "consisting of" is considered to be a preferred embodiment of the term "comprising of". If hereinafter a group is defined to comprise at least a certain number of embodiments, this is also to be understood to disclose a group, which preferably consists only of these embodiments.

### Detailed description of the invention

### Composition

In a first aspect the present invention relates to a polyolefin composition comprising
(A) a cross-linkable polyolefin with hydrolysable silane groups
(B) an acidic silanol condensation catalyst
(C) titanium dioxide, and
(D) at least one UV stabilizer selected from UV stabilizers according to one or more of formula (I), (II) and/or (III) 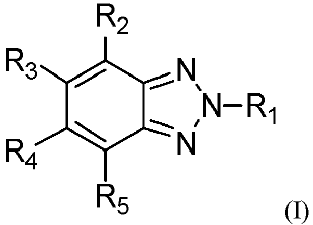
with
R₁ being a substituted or non-substituted hydrocarbon residue with at least 6 carbon atoms; and
R₂, R₃, R₄ and R₅ independently being the same or different substituted or non-substituted hydrocarbon residues, hydrogen atoms or hetero atoms; 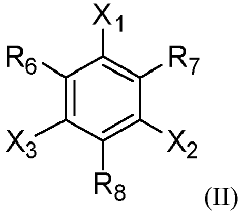
with
R₆ and R₇ being independently the same or different non-substituted or substituted aliphatic or aromatic hydrocarbon residues which independently may comprise hetero atoms, with R₈ being any substituent, and with X₁, X₂, and X₃ independently being H or OH, with the proviso that at least one of X₁, X₂ and X₃ is OH; 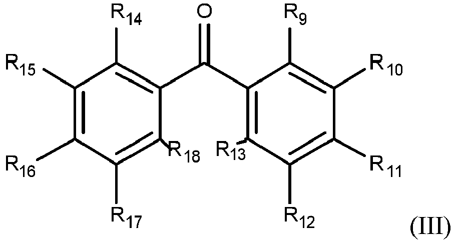 with
R₉ to R₁₈ being any substituent, preferably R₉ to R₁₈ being independently the same or different hetero atoms, substituted or non-substituted hydrocarbon residues, which may comprise hetero atoms, or hydrogen atoms with the proviso that at least one of R₉ to R₁₈ is OH;
more preferably R₉ to R₁₈ being independently the same or different hetero atoms, substituted or non-substituted hydrocarbon residues, which may comprise hetero atoms, or hydrogen atoms with the proviso that at least one of R₉ to R₁₃ is OH.

In a preferred embodiment of the at least one UV stabilizer (D) according to formula (I) R₁ in formula (I) further comprises at least one aryl group, which may be substituted or non-substituted.

Furthermore, R₁ in formula (I) preferably further comprises at least 8 carbon atoms, more preferably at least 12 carbon atoms, and even more preferably at least 14 carbon atoms. Still further, in formula (I), preferably R₂, R₃, R₄ and R₅ independently are hydrogen atoms or halogen atoms.

The at least one UV stabilizer (D) may comprise the structural unit according to formula (I) one or several times, for example two or three times. For example, two structural units according to formula (I) may be linked to each other via a bridging group.

Preferably the at least one UV stabilizer (D) is selected from the group consisting of 2-(3,5-di-tert-pentyI-2-hydroxyphenyl) benzotriazole (CAS 25973-55-1), 2-(2'-hydroxy-5'-tert-octylphenyl) benzotriazole (CAS 3147-75-9), 2-(2'-hydroxy-3',5'-di-t-butylphenyI)-5-chlorobenzotriazole (CAS 3864-99-1 ), 2-(2-hydroxy-3,5-di-(α,α-dimethylbenzyl)phenyl) 2H-benzotriazole (CAS 70321-86-7), 2-(3',5'-di-tert-butyI-2'-hydroxyphenyl)-5-chlorobenzotriazole (CAS 3846-71-7), 2,2'-methylene-bis(6-(2H-benzotriazole-2-yl)-4-1,1,3,3-tetramethylbutyl)phenol (CAS 103597-45-1), 2-(3'-t-butyl-5'-methyl-2'-hydroxyphenyl)-5-chlorobenzotriazole (CAS 3896-11-5), (2-(2'-hydroxy-5'-methylphenyl) benzotriazole (CAS 2440-22-4) and/or combinations thereof, more preferably 2-(3'-t-butyl-5'-methyl-2'-hydroxyphenyl)-5-chlorobenzotriazole (CAS 3896-11-5), 2-(3,5-di-tert-pentyl-2-hydroxyphenyl) benzotriazole (CAS 25973-55-1), 2,2'-methylene-bis(6-(2H-benzotriazole-2-yl)-4-1,1,3,3-tetramethylbutyl)phenol (CAS 103597-45-1), 2-(2-hydroxy-3,5-di-(α,α-dimethylbenzyl)phenyl) 2H-benzotriazole (CAS 70321-86-7), (2-(2'-hydroxy-5'-methylphenyl) benzotriazole (CAS 2440-22-4), and/or combinations thereof.

In a preferred embodiment of the at least one UV stabilizer (D) according to formula (II) R₆, R₇ and/or R₈ in formula (II) further comprise at least one aryl group which may be substituted or non-substituted.

Furthermore, R₆ and/or R₇ in formula (II) preferably are independently hydrocarbon residues, which comprise at least 1 carbon atom, more preferably at least 2 carbon atoms and even more preferably at least 4 carbon atoms.

R₈ preferably is an aliphatic or aromatic hydrocarbon residue which comprises heteroatoms selected from N, O or S, more preferably an aliphatic or aromatic carboxy ester group.

The at least one UV stabilizer (D) according to formula (II) may comprise the structural unit according to formula (II) one or several times, for example two or three times. For example, two structural units according to formula (II) may be linked to each other via a bridging group.

Preferred components according to formula (II) are selected from the group consisting of 3,5-(1,1-dimethylethyl)-2,4-bis (1,1-dimethyethyl) phenyl ester (CAS 4221-80-1), 3,5-di-t-butyl-4-hydroxybenzoic acid, hexadecyl ester (CAS 67845-93-6), n-hexadecyl-3,5-di-t-butyI-4-hydroxybenzoate (CAS 67845-93-6) and/or combinations thereof, and more preferably selected from the group consisting of 3,5-(1,1-dimethylethyl)-2,4-bis (1,1-dimethyethyl) phenyl ester (CAS 4221-80-1), n-hexadecyl- 3,5-di-t-butyl-4-hydroxybenzoate (CAS 67845-93-6) and/or combinations thereof.

In a preferred embodiment of the at least one UV stabilizer (D) according to formula (III) R₉ to R₁₈ in formula (III) further comprise at least one aryl group which may be substituted or non-substituted.

Furthermore, at least one of R₉ to R₁₈ in formula (III) preferably further comprises at least 6 carbon atoms, more preferably at least 7 carbon atoms and even more preferably at least 8 carbon atoms.

At least one of R₉ to R₁₃, preferably R₁₁ preferably further comprises at least 6 carbon atoms, more preferably at least 7 carbon atoms and even more preferably at least 8 carbon atoms, which may comprise heteroatoms selected from N, O or S, preferably an ether group. Preferably R₁₃ in formula (III) preferably is OH.

Furthermore, at least one of R₁₄ to R₁₈ preferably is a hydrogen atom, more preferably at least two of R₁₄ to R₁₈ are hydrogen atoms, even more preferably R₁₄ to R₁₈ are all hydrogen atoms.

The at least one UV stabilizer (D) according to formula (III) may comprise the structural unit according to formula (III) one or several times, for example two or three times. For example, two structural units according to formula (III) may be linked to each other via a bridging group.

Preferred components according to formula (III) are selected from the group consisting of 2-hydroxy-4-n-octoxy-benzophenone (CAS 1843-05-6), poly[2-hydroxy-4-(acryloyloxyethoxy)benzophenone] (CAS 29963-76-6) and/or combinations thereof.

The polyolefin composition can comprise one or more UV stabilizer(s) (D), such as 1 to 6 UV stabilizer(s) (D), like 1, 2, 3, 4, 5 or 6 UV stabilizer(s) (D), preferably 1, 2 or 3 UV stabilizer(s) (D).

In one embodiment component (D) is selected from UV stabilizers according to formula (I). In another embodiment component (D) is selected from UV stabilizers according to formula (II).

In yet another embodiment component (D) is selected from UV stabilizers according to formula (III).

It is preferred that the polyolefin composition only comprises UV stabilizer(s) comprising the structural unit according to formula (I), (II) or (III), i.e. the UV stabilizer(s) present in the polyolefin composition consist(s) of UV stabilizer(s) (D).

In one preferred embodiment, the polyolefin composition only comprises UV stabilizer(s) comprising the structural unit according to formula (I).

In another preferred embodiment, the polyolefin composition only comprises UV stabilizer(s) comprising the structural unit according to formula (II).

In yet another preferred embodiment, the polyolefin composition only comprises UV stabilizer(s) comprising the structural unit according to formula (III).

The UV stabilizer (D) is preferably present in the polyolefin composition in an amount of from 0.10 to 3.00 wt%, more preferably 0.35 to 2.00 wt%, most preferably 0.75 to 1.50 wt%, based on the total weight amount of the polyolefin composition.

The at least one UV stabilizer (D) can be added in form of a master batch compounded with a suitable polyolefin at high concentrations. Masterbatches are usually used for improving the distribution of the at least one UV stabilizer (D) in the polyolefin composition. In the case that the UV stabilizer (D) is added as masterbatch, the above amounts only relate to the end concentration of the at least one UV stabilizer (D) in the polyolefin composition without the other components of the masterbatch, i.e. the polyolefin of the masterbatch is not counted to the amount of the at least one UV stabilizer (D) in the polyolefin composition.

The titanium dioxide (C) preferably comprises, more preferably consists of anatase titanium dioxide particles. Anatase is a metastable mineral form of titanium dioxide.

The titanium dioxide (C) can be surface-coated or non-surface-coated. In the case that the titanium dioxide is surface-coated, it is preferred that the coating does not comprise silica. The coating can be an inorganic treatment with alumina, zirconia or hydrous titania, preferably with alumina and/or an organic treatment with silicones or siloxanes such as polysiloxanes, preferably with polysiloxanes. When surface coated, the titanium dioxide is preferably coated with an inorganic and organic treatment.

In one embodiment the titanium dioxide (C) comprises, preferably consists of non-surface-coated titanium dioxide.

In said embodiment the polyolefin composition comprises non-surface-coated titanium dioxide particles in an amount of from 0.10 to 3.00 wt%, more preferably 0.20 to 1.50 wt%, most preferably 0.35 to 0.75 wt%, and at least one UV stabilizer (D) in an amount of from 0.60 to 3.00 wt%, more preferably 0.75 to 2.00 wt%, most preferably 0.85 to 1.50 wt%, all based on the total weight amount of the polyolefin composition.

In another embodiment the titanium dioxide (C) comprises, preferably consists of surface-coated titanium dioxide, whereby the coating preferably does not contain silica.

In said embodiment the polyolefin composition comprises surface-coated titanium dioxide particles in an amount of from 0.10 to 0.95 wt%, more preferably 0.20 to 0.85 wt%, most preferably 0.35 to 0.75 wt%, and at least one UV stabilizer (D) in an amount of from 0.60 to 3.00 wt%, more preferably 0.75 to 2.00 wt%, most preferably 0.85 to 1.50 wt%, all based on the total weight amount of the polyolefin composition.

The titanium dioxide (C) can be added in form of a masterbatch compounded with a suitable polyolefin at high concentrations. Masterbatches are usually used for improving the distribution of the titanium dioxide (C) in the polyolefin composition. In the case that the titanium dioxide (C) is added as masterbatch, the above amounts only relate to the end concentration of the titanium dioxide (C) in the polyolefin composition without the other components of the masterbatch, i.e. the polyolefin of the masterbatch is not counted to the amount of the titanium dioxide (C) in the polyolefin composition.

The composition of all aspects of the present invention comprises a cross-linkable polyolefin containing hydrolysable silane groups (A).

Preferably, cross-linkable polyolefin containing hydrolysable silane groups (A) makes up at least 30 wt%, more preferably at least 50 wt%, and even more preferably at least 80 wt% or at least 90 wt% of the total polyolefin composition.

It is preferred that the cross-linkable polyolefin containing hydrolysable silane groups (A) is used in the composition of the invention, in an amount of 80 to 99.5 wt%, more preferably of 85 to 99 wt.%, and even more preferably of 88 of 98 wt% of the total polyolefin composition.

Preferably the cross-linkable polyolefin (A) comprises, more preferably consists of, a polyethylene containing hydrolysable silane groups.

The hydrolysable silane groups may be introduced into the polyolefin by copolymerization of for example ethylene monomers with silane group containing comonomers or by grafting, i.e. by chemical modification of the polymer by addition of silane groups mostly in a radical reaction. Both techniques are well known in the art.

Preferably the silane group containing polyolefin has been obtained by copolymerization or by grafting, more preferably by copolymerization.

In the case of polyolefins, preferably polyethylene, the copolymerization is preferably carried out with an unsaturated silane compound represented by the formula (IV)

R¹SiR²_{q}Y_{3-q} (IV)

wherein
R¹ is an ethylenically unsaturated hydrocarbyl, hydrocarbyloxy or (meth)acryloxy hydrocarbyl group,
R² is an aliphatic saturated hydrocarbyl group,
Y which may be the same or different, is a hydrolysable organic group and q is 0, 1 or 2.

Examples of the unsaturated silane compound are those wherein
R¹ is vinyl, allyl, isopropenyl, butenyl, cyclohexanyl or gamma-(meth)acryloxy propyl;
Y is methoxy, ethoxy, formyloxy, acetoxy, propionyloxy or an alkyl- or arylamino group; and
R², if present, is a methyl, ethyl, propyl, decyl or phenyl group.

A preferred unsaturated silane compound is represented by the formula (V)

CH2=CHSi(OA)a (V)

wherein
A is a hydrocarbyl group having 1-8 carbon atoms, preferably 1-4 carbon atoms.

More preferred compounds are vinyl trimethoxysilane, vinyl bismethoxyethoxysilane, vinyl triethoxysilane, gamma-(meth)acryl-oxypropyl-trimethoxysilane,
gamma(meth)acryloxypropyl triethoxysilane, and vinyl triacetoxysilane, or combinations of two or more thereof.

The copolymerization of the olefin, for example ethylene, and the unsaturated silane compound may be carried out under any suitable conditions resulting in the copolymerization of the two monomers.

The cross-linkable polyolefin with hydrolysable silane groups (A) is preferably a low density polyethylene with hydrolysable silane groups comonomers. Thereby, ethylene monomers and the hydrolysable silane groups comonomers are preferably copolymerized in a high pressure process as known in the art.

Preferably in the cross-linkable polyolefin with hydrolysable silane groups (A) the silane groups are present in an amount of 0.001 wt% or more, more preferably 0.01 wt% or more, even more preferably 0.1 wt% or more of component (A), and most preferably 0.4 wt% or more of component (A).

Preferably in the cross-linkable polyolefin with hydrolysable silane groups (A) the silane groups are present in an amount of 15.0 wt% or less, more preferably 5.0 wt% or less, even more preferably 2.5 wt% or less, and most preferably 1.5 wt% or less of component (A).

Preferably in the cross-linkable polyolefin with hydrolysable silane groups (A) the silane groups are present in an amount of 0.001 to 15.0 wt%, more preferably 0.01 to 5.0 wt%, even more preferably 0.1 to 2.5 wt% and most preferably 0.4 to 1.5 wt% of component (A).

Preferably the polyolefin composition has an MFR₂ (190°C, 2.16 kg) of 0.1 to 200 g/10 min, more preferably of 0.3 to 50 g/10 min and most preferably of 0.5 to 10 g/10 min, and/or a density of 850 to 960 kg/m³, more preferably of 860 to 945 kg/m³ and most preferably of 880 of 935 kg/m³.

It is furthermore preferred that the polyolefin composition comprises a polyolefin with monomer units with polar groups.

Preferably the polar groups are selected from siloxane, amide, anhydride, carboxylic, carbonyl, hydroxyl, ester and epoxy groups.

The polar groups may for example be introduced into the polymer by grafting of an ethylene polymer with a polar-group containing compound, i.e. by chemical modification of the polyolefin by addition of a polar group containing compound mostly in a radical reaction. Grafting is for example described in US 3,646,155 and US 4,117,195.

It is further preferred that said polar groups are introduced into the polymer by copolymerization of olefinic, including ethylene, monomers with comonomers bearing polar groups.

As examples of comonomers having polar groups may be mentioned the following:
(a) vinyl carboxylate esters, such as vinyl acetate and vinyl pivalate,
(b) (meth)acrylates, such as methyl(meth)acrylate, ethyl(meth)acrylate, butyl(meth)acrylate and hydroxyethyl(meth)acrylate,
(c) olefinically unsaturated carboxylic acids, such as (meth)acrylic acid, maleic acid and fumaric acid,
(d) (meth)acrylic acid derivatives, such as (meth)acrylonitrile and (meth)acrylic amide, and
(e) vinyl ethers, such as vinyl methyl ether and vinyl phenyl ether.

Amongst these comonomers, vinyl esters of monocarboxylic acids having 1 to 4 carbon atoms, such as vinyl acetate, and (meth)acrylates of alcohols having 1 to 4 carbon atoms, such as methyl (meth)acrylate, are preferred.

Especially preferred comonomers are butyl acrylate, ethyl acrylate and methyl acrylate. Two or more such olefinically unsaturated compounds may be used in combination. The term "(meth)acrylic acid" is intended to embrace both acrylic acid and methacrylic acid. Preferably, the polar group containing monomer units are selected from the group of acrylates and/or acetates.

The amount of polar group containing monomer units in the polyolefin preferably is 40 wt% or less, more preferably 35 wt% or less, and still more preferably is 25 wt% or less. Preferably in the polyolefin with polar groups the monomer units with polar groups are present in an amount of 0.1 to 40 wt%, preferably 1.0 to 35 wt%, more preferably 2.0 to 25 wt% and even more preferably 3.0 to 20 wt%.

Furthermore, preferably the polar group containing monomer units are present in the polyolefin with polar groups in an amount of from 2.5 to 15 mol%, more preferably 3 to 10 mol%, and most preferably 3.5 to 6 mol%.

In another preferred embodiment, the cross-linkable polyolefin with hydrolysable silane groups (A) at the same time also contains polar groups in any of the embodiments as described hereinbefore.

Preferably in said embodiment the cross-linkable polyolefin with hydrolysable silane groups (A) is a terpolymer also containing monomer units with polar groups, i.e. the cross-linkable polyolefin with hydrolysable silane groups (A) contains both, silane groups and polar groups. Furthermore, also the preferred amounts for the silane group and the polar group containing monomers as described above apply for the terpolymer.

It is preferred that the terpolymer is a terpolymer of ethylene monomer units, hydrolysable silane groups (A) and polar groups.

Such terpolymers may be produced by grafting or by copolymerization of olefin monomers and unsaturated monomers containing silane groups and polar groups.

According to a preferred embodiment the terpolymer is produced by copolymerization of olefin monomers and unsaturated monomers containing silane groups and polar groups.

The terpolymer is preferably a low density polyethylene with hydrolysable silane groups comonomers and polar comonomers. Thereby, ethylene monomers, the hydrolysable silane groups comonomers and the polar comonomers are preferably copolymerized in a high pressure process as known in the art.

According to another preferred embodiment the terpolymer is produced by grafting silane compounds and/or polar groups containing compounds onto the polyolefin.

Preferably the monomer units with polar groups comprise monomer units with acrylate and/or acetate units.

If such a terpolymer containing both the silane groups and the polar groups is used in the composition of the invention, it is preferred that it makes up at least 10 wt%, more preferably at least 50 wt%, and even more preferably at least 80 wt% of the total polyolefin composition. Further preferred the terpolymer containing both the silane groups and the polar groups is used in the composition of the invention, in an amount of 80 to 99.5 wt%, more preferably of 85 to 99 wt%, and even more preferably of 90 of 98 wt% of the total polyolefin composition.

For cross-linking of such polyolefins, a silanol condensation catalyst must be used. Conventional catalysts are for example tin-organic compounds such as dibutyl tin dilaurate (DBTDL). It is further known that the cross-linking process advantageously is carried out in the presence of acidic silanol condensation catalysts. In contrast to the conventional tin-organic catalysts the acidic catalysts allow cross-linking to quickly take place already at room temperature. Such acidic silanol condensation catalysts are disclosed for example in WO 95/17463. The content of this document is enclosed herein by reference.

Examples for acidic silanol condensation catalysts comprise Lewis acids, inorganic acids such as sulfuric acid and hydrochloric acid, and organic acids such as citric acid, stearic acid, acetic acid, sulfonic acid and alkanoic acids such as dodecanoic acid.

Preferred examples for an acidic silanol condensation catalyst are sulfonic acid and tin organic compounds.

It is preferred that the acidic silanol condensation catalyst comprises a sulfonic acid, preferably comprises an organic sulfonic acid.

It is further preferred that the acidic silanol condensation catalyst comprises a sulfonic acid compound according to formula (VI):

Ar(SO₃H)_{X} (VI)

or a precursor thereof,

Ar being an aryl group with one or several aromatic rings, preferably 1 to 3 aromatic rings, more preferably 1 to 2 aromatic rings, which may be substituted or non-substituted, and x being at least 1.

The acidic silanol condensation catalyst may comprise the structural unit according to formula (VI) one or several times, for example two or three times. For example, two structural units according to formula (VI) may be linked to each other via a bridging group such as an alkylene group.

Preferably, the Ar group is an aryl group, which is substituted with at least one C₁ to C₃₀-hydrocarbyl group, more preferably C₄ to C₃₀-alkyl group.

Furthermore, preferably the compound used as organic aromatic sulfonic acid silanol condensation catalyst has from 10 to 200 carbon atoms, more preferably from 14 to 100 carbon atoms.

According to a preferred embodiment acidic silanol condensation catalyst (B) comprises an organic sulfonic acid comprising 10 to 200 carbon atoms, preferably 14 to 100 carbon atoms, and the sulfonic acid further comprises at least one aromatic group.

It is further preferred that the hydrocarbyl group is an alkyl substituent having 10 to 18 carbon atoms and even more preferred that the alkyl substituent contains 12 carbon atoms and is selected from dodecyl and tetrapropyl. It is most preferred that the aryl group is a benzene substituted group with an alkyl substituent containing 12 carbon atoms.

The currently most preferred compounds of formula (VI) are dodecyl benzene sulfonic acid, tetrapropyl benzene sulfonic acid and naphthalene-based sulfonic acids, such as C₁₂-alkylated naphthyl sulfonic acids.

The acidic silanol condensation catalyst may also be a precursor of a compound of formula (VI), i.e. a compound that is converted by hydrolysis to a compound of formula (VI). Such a precursor is for example the acid anhydride of the sulfonic acid compound of formula (VI). Another example is a sulfonic acid of formula (VI) that has been provided with a hydrolysable protective group as for example an acetyl group, which can be removed by hydrolysis to give the sulfonic acid of formula (VI). The acidic silanol condensation catalyst is preferably used in an amount from 0.0001 to 3 wt%.

The preferred amount of acidic silanol condensation catalyst is from 0.001 to 2 wt% and more preferably 0.005 to 1 wt% based on the amount of acidic silanol groups containing polyolefin in the polyolefin composition.

The effective amount of catalyst depends on the molecular weight of the catalyst used. Thus, a smaller amount is required of a catalyst having a low molecular weight than a catalyst having a high molecular weight.

The polyolefin composition according to the invention may further contain various additives different from titanium dioxide (C) and the at least one UV stabilizer (D), such as miscible thermoplastics, antioxidants, further stabilizers for example water tree retardants, scorch retardants, lubricants, fillers, coloring agents and foaming agents.

The total amount of additives different from titanium dioxide (C) and the at least one UV stabilizer (D) is generally 0.3 to 10.0 wt%, preferably 1.0 to 7.0 wt%, more preferably 1.0 to 5.0 wt% of the total polyolefin composition.

As antioxidant, preferably a compound, or a mixture of such compounds, is used which is neutral or acidic, must comprise a sterically hindered phenol group or aliphatic sulfur groups. Such compounds are disclosed in EP 1 254 923 to be particularly suitable antioxidants for stabilization of polyolefins containing hydrolysable silane groups which are cross-linked with a silanol condensation catalyst, in particular an acidic silanol condensation catalyst. Other preferred antioxidants are disclosed in WO 2005/003199A1.

Preferably, the antioxidant is present in the polyolefin composition in an amount of from 0.01 to 3.0 wt%, more preferably 0.05 to 2.0 wt%, and most preferably 0.08 to 1.5 wt% of the total polyolefin composition.

As filler, preferably carbon black in an amount of 3.0 wt% or less, preferably 2.5 wt% or less, most preferably 2.0 wt% or less of the total polyolefin composition can be used.

As coloring agent, all coloring agents apart from carbon black suitable for cable or pipe applications can used.

It is preferred that the polyolefin composition does not comprise additional fillers or coloring agents.

The titanium dioxide (C) and at least one UV stabilizer (D) and optionally further additives different from titanium dioxide (C) and the at least one UV stabilizer (D) may be compounded with the silane group containing polyolefin. Alternatively, the at least one UV stabilizer (D) and optionally further additives may be compounded with the silane group containing polyolefin. The titanium dioxide (C) is added later to the silane group containing polyolefin containing the at least one UV stabilizer (D) and the optional further additives or is compounded in a separate compounding step with the silane group containing polyolefin containing the at least one UV stabilizer (D) and the optional further additives.

However, the titanium dioxide (C) and/or the at least one UV stabilizer (D) is usually added together with the acidic silanol condensation catalyst (B) to the silane group containing polyolefin by compounding the polymer with one or more so-called master batch(es), in which the catalyst, usually the titanium dioxide (C) and/or the at least one UV stabilizer (D), and optionally further additives are contained in a polymer, for example polyolefin, matrix in concentrated form. The acidic silanol condensation catalyst (B), the titanium dioxide (C) and the at least one UV stabilizer (D) can be added to the the silane group containing polyolefin (A) in one single masterbatch or in two or three separate masterbatches.

Accordingly, the present invention also pertains to a master batch for a cross-linkable polyolefin composition comprising a matrix polymer and an acidic silanol condensation catalyst (B) in any of the above described embodiments.

The matrix polymer is preferably a polyolefin, more preferably a polyethylene, which may be a homo- or copolymer of ethylene, for example low density polyethylene, or polyethylene-methyl-, -ethyl-, or -butyl-acrylate copolymer containing 1 to 50 wt% of the acrylate, and mixtures thereof.

As stated, in the masterbatch the compounds to be added to the silane group containing polyolefin are contained in concentrated form, i.e. in a much higher amount than in the final composition.

A masterbatch preferably comprises component (B) in an amount of from 0.3 to 15 wt%, more preferably from 0.7 to 10 wt%.

A masterbatch preferably comprises component (C) in an amount of from 0.3 to 7 wt%, more preferably from 0.7 to 5 wt%.

A masterbatch preferably comprises component (D) in an amount of from 0.3 to 7 wt%, more preferably from 0.7 to 5 wt%.

Furthermore, preferably the masterbatch also contains some or all of the other additives as described above, for example the stabilizers.

It is preferred that the amount of the stabilizers contained in the masterbatch is up to 20 wt%. Preferably the amount of stabilizers contained in the masterbatch is between 0.1 to 20 wt%.

A masterbatch preferably is compounded with the silane group containing polymer in an amount of from 0.7 to 10 wt.%, more preferably from 1 to 8 wt.%.

Compounding may be performed by any known compounding process, including extruding the final product with a screw extruder or a kneader.

The polyolefin compositions according to all aspects of the present invention preferably show improved UV stability as can be seen from their tensile properties measured after exposing the compositions to weathering conditions.

It is preferred that the polyolefin composition has a tensile stress at break of at least 6.5 MPa, more preferably at least 7.0 MPa, most preferably at least 8.0 MPa when measured on 1.8 mm thick tapes according to ISO 527-1:2012 at 23°C and 50% relative humidity at a speed of 250 mm/min after exposure to weathering conditions according to ISO 4892-2:2013 for 2000 h. The upper limit of said tensile stress at break is usually not more than 50 MPa, preferably 30 MPa.

It is further preferred that the polyolefin composition has an elongation at break of at least 25%, more preferably at least 50%, most preferably at least 125%, when measured on 1.8 mm thick tapes according to ISO 527-1:2012 at 23°C and 50% relative humidity at a speed of 250 mm/min after exposure to weathering conditions according to ISO 4892-2:2013 for 2000 h. The upper limit of said elongation at break is usually not more than 500%, preferably 350%.

### Article

According to a further aspect the present invention relates to an article comprising the polyolefin composition in any of the above described embodiments.

In a preferred embodiment the article refers to a wire or cable or a pipe or a film preferably used or stored outdoors.

It is especially preferred that in the article the polyolefin composition is crosslinked, preferably by crosslinking the hydrolysable silane groups of component (A) in the presence of the acidic silanol condensation catalyst (B) as described above.

In a preferred embodiment, the invention relates to a medium voltage cable comprising one or more conductors in a cable core, an inner semiconducting layer, followed by an insulating layer, and then an outer semiconducting layer, and an outer protective jacket wherein at least one of these layers is a track-resistant layer and/or wherein at least one of these layers, preferably the outer layer or the insulating layer when the outer layers are pealed off, comprises the polyolefin composition as described above.

In another preferred embodiment the medium voltage cable may also comprise one or more conductors in a cable core, an inner semiconducting layer, an insulating layer and/or an outer protective jacket, wherein at least one of these layers is a track-resistant layer and/or wherein at least one of these layers comprises the polyolefin composition as described above.

Preferably the medium voltage cable is an overhead cable.

Preferably the overhead cable comprises one or more conductors in a cable core, an inner semiconducting layer and an insulating layer jacket wherein at least one of these layers comprises the polyolefin composition as described above.

Insulating layers for medium voltage power cables generally have a thickness of at least 0.5 mm, typically at least 1.0 mm, and the thickness increases with increasing voltage the cable is designed for.

Preferably, the insulating layer has a thickness of at least 2 mm, more preferably at least 4 mm whereby the thickness of the insulating layer is not more than 15 mm, preferably not more than 10 mm.

Preferably the insulating layer has a thickness between 1 to 10 mm and more preferably between 2 to 4 mm.

In addition to the semiconductive and insulating layers, further layers may be present in medium voltage cables, such as a metallic tape or wire shield, and, finally, an outermost jacketing layer.

In a further preferred embodiment, the invention relates to a low voltage cable comprising one or more conductors in a cable core followed by an insulating layer and an outer protective jacket wherein at least one of these layers, preferably the outer layer or the insulating layer when the outer layers are pealed off, comprises the polyolefin composition as described above.

In another preferred embodiment the invention relates to a low voltage cable or wire comprising an insulating layer wherein the insulating layer comprises the polyolefin composition as described above.

Preferably the low voltage cable is an overhead cable.

Preferably the overhead low voltage cable comprises one or more conductors in a cable core, an insulating layer and/or an outer protective jacket wherein at least one of these layers comprises the polyolefin composition as described above. The insulating layer may also be a track-resistant insulating layer.

Further preferred the overhead low voltage cable comprises one or more conductors in a cable core, an insulating layer and/or a protective layer wherein at least one of the layers, preferably the insulating layer comprises the polyolefin composition as described above and/or at least one of the layer is a track-resistant layer.

Preferably, the insulating layer of the low voltage cable or wire has a thickness of 0.1 to 5 mm, more preferably at more preferably of 0.25 to 4 mm, even more preferably of 0.4 to 3 mm and most preferably of 0.5 to 2.3 mm.

Usually, the cable is produced by co-extrusion of the different layers onto the conducting core. Then, cross-linking is performed by moisture curing, wherein in the presence of the acidic silanol condensation catalyst the silane groups are hydrolyzed under the influence of water or steam, resulting in the splitting off of alcohol and the formation of silanol groups, which are then cross-linked in a condensation reaction wherein water is split off.

Moisture curing may be performed in a sauna or water bath at temperatures of 70 to 100°C. In a preferred embodiment of the present invention the curing is performed at a temperature of 5 to 50°C, more preferably of 10 to 40°C and a humidity below 85 %, more preferably below 75 %.

In another aspect relates furthermore to the use of the polyolefin composition in any of the above described embodiments for the production of an article, preferably of a film or a layer of a wire or cable, more preferably a low or medium voltage overhead cable.

Also preferred the polyolefin composition according to any of the above described embodiments is used for the production of an insulating layer of a low voltage wire or cable and/or a layer of a low or medium voltage overhead cable.

According to another aspect the invention relates to the use of the polyolefin composition in any of the above described embodiments for the production of a layer of low voltage cables, more preferably of a jacketing layer for outdoor low voltage cables and of an insulation layer for indoor low voltage cables.

In another preferred embodiment the invention relates to the use of the polyolefin composition in any of the above described embodiments for the production of a layer of a cable, preferably of a track resistant cable mounted in power lines.

The following examples serve to further illustrate the present invention. The invention is not limited to the examples.

### Examples

### 1. Measurement methods

The following definitions of terms and determination methods apply for the above general description of the invention as well as to the below examples unless otherwise defined.

### a) Melt Flow Rate

The melt flow rate (MFR) was determined according to ISO 1133 and is indicated in g/10 min. The MFR is an indication of the flowability, and hence the processability of the polymer. The higher the melt flow rate, the lower the viscosity of the polymer.

The MFR₂ of polyethylene (co-)polymers was measured at a temperature of 190°C and at a load of 2.16 kg.

### b) Density

Density of the polymer was measured according to ISO 1183-1:2004 Method A on compression moulded specimen prepared according to EN ISO 1872-2 and is given in kg/m3.

### c) Elongation at break / Tensile stress at break / Tensile strength

The tensile properties (elongation at break, tensile stress at break and tensile strength) were measured in accordance with ISO 527-1: 2012 at 23°C and 50% relative humidity on a Zwick Z100-725333 tensile tester at a speed of 50 mm/min. The extensometer used was Zwick MultiXtens-236190 extensometer.

The test specimens were extruded tapes with a thickness of 1.8 mm prepared as described below for the hot set elongation test.

The specimens subjected to weathering conditions using a Weather-Ometer 4 according to ISO 4892-2:2013, method A C1 for 500 h, 1000 h, 1500 h and 2000 h. A 60 W/m³ (300-400 nm) lamp and a 0.5 W/m³ (340 nm) light was used at a humidity of up to 70 % and a temperature of 65°C with 102 min in dry condition sets and 18 min raining condition sets alternating.

The tensile properties of the weathered test specimens were compared to the tensile properties of non-weathered test specimens (0 h). The average value out of 6 to 10 samples is reported herein.

### d) Hot set elongation test

Tape samples as prepared below in the experimental part were used to determine the hot set properties. Three dumb-bells sample, taken out along extrusion direction were prepared according to ISO 527 5A from the 1.8 +/- 0.1 mm thick cross-linked tape. The hot set tests were made according to EN 60811-2-1 (hot set test) by measuring the thermal deformation. Reference lines, were marked 20 mm apart on the dumb-bells. Each test sample was fixed vertically from upper end thereof in the oven and the load of 0.2 MPa are attached to the lower end of each test sample. After 15 min, 200°C in the oven the distance between the pre-marked lines were measured and the percentage hot set elongation calculated, elongation %. For permanent set %, the tensile force (weight) was removed from the test samples and after recovered in 200°C for 5 minutes and then let to cool in room temperature to room temperature. The permanent set % was calculated from the distance between the marked lines. The average of the three tests was reported.

### e) Cross-linking

Prior to hot set test and tensile properties test, the 1.8 m thick tapes were put into a water bath at 90°C for 24 hours or crosslinked between 1-14 days ambient, 23°C 50%RH

### 2. Materials

### a) Polyethylene with hydrolysable silane groups

Polyethylene 1 (PE1) is a silane group containing low density polyethylene having a density of 923 kg/m³, a MFR₂ of 1 g/10 min and a vinyl trimethyl silane (VTMS) copolymer content of 0.072 mol kg/polymer (= 1.1 wt.-% based on the total weight of the copolymer produced according to the conditions disclosed for inventive example 2 (polymer D) according to EP 2 508 566 A1.

Polyethylene 2 (PE2) is a silane group containing low density polyethylene having a density of 923 kg/m³, a MFR₂ of 1 g/10 min, a vinyl trimethyl silane (VTMS) copolymer content of 1.9 wt.% and a carbon black content of 2.5 wt%.

### b) Silanol condensation catalyst masterbatch

- a matrix resin: an ethylene butylacrylate copolymer with 17 wt% butylacrylate, a density of 924 kg/m³ and a MFR₂ of 47.0 g/10 min;
- a silanol condensation catalyst: linear dodecylbenzene sulphonic acid (DDBSA);
- a silicon group containing compound: hexadecyl trimethoxy silane (HDTMS);
- antioxidant: butylated reaction products of 4-methyl-phenol with dicyclopentadiene (Ralox LC, CAS-no. 68610-51-5); and 1,3,5-tri-methyl-2,4,6-tris-(3,5-di-tert. butyl-4-hydroxyphenyl)benzene (Irganox 1330", CAS-no. 1709-702);
- carbon black 32 wt%.

Compounding of the master batches was performed using a Brabender kneader (small chamber, 47 cm³) and 3 mm thick plates were compression moulded at 180 °C.

### c) UV stabilizer masterbatch

33 wt% of Tinuvin 326 (2-(2'-Hydroxy-3'-tert-butyl-5'-methylphenyl)-5-chlorobenzortriazole, CAS-No. 3846-71-7), commercially available from BASF SE, was compounded with 67 wt% of an ethylene butylacrylate with 17 wt.-% butylacrylate, having a MFR₂ 8 g/10 min of and an density of 925.5 kg/m³.

### d) Titanium dioxide masterbatch

33 wt% of the below listed titanium dioxide species, all commercially available from Venator Materials PLC, was compounded with 67 wt% of an ethylene butylacrylate copolymer with 17 wt% butylacrylate, a density of 925.5 kg /m³ and a MFR₂ of 8 g/10 min.

Titanium dioxide species:
- Hombitan AN:: non-coated anatase microcrystals, commercially available from Venator, UK;
- Hombitan LW-S:: non-coated anatase microcrystals, commercially available from Venator, UK;
- Hombitan LW:: non-coated anatase microcrystals, commercially available from Venator, UK;
- Hombitan LO-CR-K:: anatase microcrystals, which are both inorganically (Al₂O₃) and organically coated, commercially available from Venator, UK

### 3. Experiments

### a) Screening of titanium dioxide species

In a first approach all above titanium dioxide species were evaluated for interference of the cross-linking behaviour.

PE1 was dry blended with 5.0 wt% SCC-MB1 and 1.5 wt% or 3.0 wt% of the above described titanium dioxide masterbatches (TiO₂ end concentration in composition: 0.5 wt%, 1.0 wt%).

For reference PE1 was dry blended with 5.0 wt% SCC-MB 1 without presence of titanium dioxide.

The dry blends were then extruded to 1.8 mm thick tapes in a Collin TeachLine E20T tape extruder with a 421, 20D Compression screw, D=20 mm at a temperature profile of 135/145/155°C and with a screw speed of 30 rpm.

The tapes were cross-linked as described above and the hot set elongation and the tensile properties are measured on the non-weathered cross-linked tapes.

The results are listed in Table 2.

**Table 2: Cross-linking and tensile properties screening of different titanium dioxide species**

| | Hot set (200°C, 20N) after 14d 23°C, 50%RH | Hot set (200°C, 20N) after 24h 90°C | Tensile strength, MPa | Elongation at break, % |
|---|---|---|---|---|
| Reference (no Titaniumdioxide) | 68.4 | 67 | 19.5 | 442 |
| 0.5% Hombitan AN | 85 | 66.8 | 20.7 | 499 |
| 1% Hombitan AN | 102 | 105.2 | 20.2 | 520 |
| 0.5% Hombitan LW-S | 91.1 | 61.8 | 21.5 | 486 |
| 1% Hombitan LW-S | 102.3 | 98.6 | 21 | 523 |
| 0.5% Hombitan LW | 93.4 | 69.6 | 20.9 | 482 |
| 1% Hombitan LW | 124.8 | 71.6 | 20 | 528 |
| 0.5% Hombitan LO-CR-K | 99.1 | 132.1 | 20.4 | 560 |
| 1% Hombitan LO-CR-K | 333.4 | N/A | 16.5 | 704 |

It can be seen that the non-coated titanium dioxide species Hombitan AN, Hombitan LW-S and Hombitan LW show a high reduction in elongation indicating good cross-linking behaviour and good tensile properties which all are comparable to the reference. Thus, the uncoated titanium dioxide species do not significantly interfere with the cross-linking behaviour of the DDBSA silanol condensation catalyst.

The coated titanium dioxide species Hombitan LO-CR-K shows significant interference of the cross-linking behaviour of the DDBSA silanol condensation catalyst at the higher weight amount of 1 wt%, whereas no significant interference of the cross-linking behaviour of the DDBSA silanol condensation catalyst can be seen at the lower weight amount of 0.5 wt%.

### b) Crosslinking behaviour and UV stability of inventive compositions

For the evaluation of the cross-linking behaviour and UV stability of the inventive compositions non-coated titanium dioxide species Hombitan LW-S and coated titanium dioxide species Hombitan LO-CR-K were selected.

For the inventive examples PE1 was dry blended with 5.0 wt% SCC-MB1, 1.5 wt% or 3.0 wt% of the above described titanium dioxide masterbatches (TiO₂ end concentration in composition: 0.5 wt%, 1.0 wt%) and 1.0 wt% or 3.0 wt% of the above described UV stabilizer masterbatches (UV stabilizer end concentration in composition: 0.33 wt%, 1.0 wt%).

In view of the cross-linking behaviour screened in the experiments above Hombitan LO-CR-K was only introduced in an amount of 1.5 wt% (end concentration in composition (0.5 wt%), whereas Hombitan LW-S was introduced in both amounts of 1.5 wt% and 3.0 wt% (end concentration in composition: 0.5 wt%, 1.0 wt%). The compositions of the inventive examples are listed in Table 3.

**Table 3: Compositions of UV stabilizers in inventive examples IE1-IE6 (end concentrations)**

| | IE1 | IE2 | IE3 | IE4 | IE5 | IE6 |
|---|---|---|---|---|---|---|
| LW-S [wt%] | 0.5 | 1.0 | --- | 1.0 | 0.5 | --- |
| LO-CR-K [wt%] | --- | --- | 0.5 | --- | --- | 0.5 |
| UV stabilizer [wt%] | 1.0 | 1.0 | 0.33 | 0.33 | 0.33 | 1.0 |

As comparative example 1 (CE1) PE1 was dry blended with 5.0 wt% SCC-MB1 without titanium dioxide or UV stabilizer.

As comparative example 2 (CE2) PE1 was dry blended with 5.0 wt% SCC-MB1 and 3.0 wt% UV stabilizer masterbatch (UV stabilizer end concentration in composition: 1.0 wt%) without titanium dioxide.

As reference example 1 (RE1) PE2 was dry blended with 5.0 wt% SCC-MB1. RE1 contains 2.3 wt% carbon black as UV stabilizer.

As reference example 2 (RE2) PE1 was dry blended with 7.0 wt% SCC-MB2. RE2 contains 1.6 wt% carbon black as UV stabilizer.

The dry blends were then extruded to 1.8 mm thick tapes in a Collin TeachLine E20T tape extruder with a 421, 20D Compression screw, D=20 mm at a temperature profile of 135/145/155°C and with a screw speed of 30 rpm. The tapes were cross-linked as described above and the hot set elongation and the tensile properties are measured on weathered (0h) and non-weathered (500 h, 1000 h, 1500 h, 2000 h) cross-linked tapes.

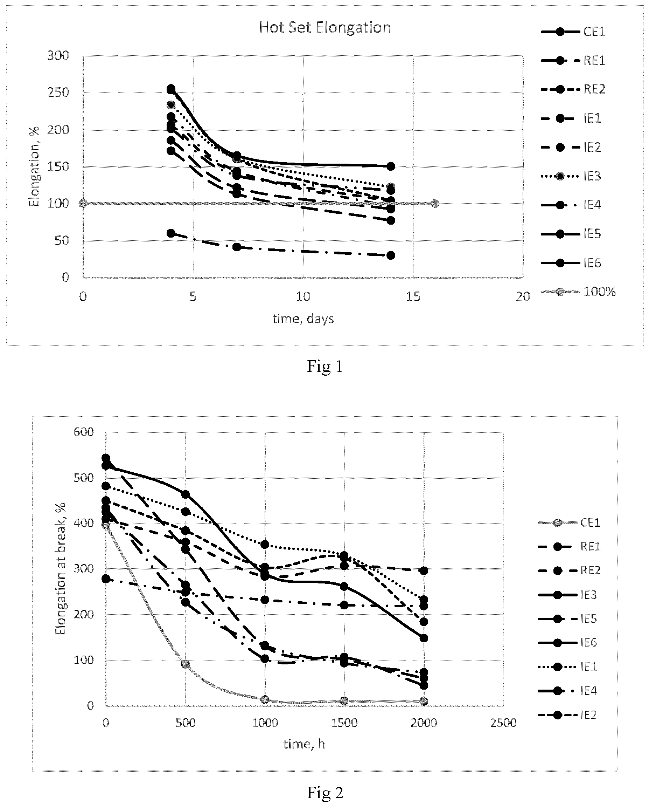

The cross-linking speed at ambient conditions (50% RH, 23°C) over 14 hours of the tapes of inventive examples IE1-IE6, reference examples RE1 and RE2 and comparative example CE1 are shown in Figure 1 in a graph of elongation over time. It can be seen that all examples show sufficient cross-linking behaviour, indicating that the UV stabilizing additives of titanium dioxide and UV stabilizer do not significantly interfere with the of the cross-linking behaviour of the DDBSA silanol condensation catalyst.

The tensile properties of the weathered (0 h) and non-weathered (500 h, 1000 h, 1500 h, 2000 h) cross-linked tapes are listed in Table 4.

**Table 4: Tensile properties of the weathered and non- cross-linked tapes**

| | Time, h | RE1 | RE2 | CE1 | CE2 | IE1 | IE2 | IE3 | IE4 | IE5 | IE6 |
|---|---|---|---|---|---|---|---|---|---|---|---|
| tensile stress at break, MPa | 0 | 18.8 | 19.8 | 18.1 | 19.3 | 22.1 | 18.1 | 17.0 | 18.6 | 18,9 | 18.8 |
| elongation at break, % | | 278 | 409 | 396 | 433 | 482 | 450 | 543 | 433 | 424 | 527 |
| tensile stress at break. MPa | 500 | 19.2 | 17.9 | 8.6 | - | 20.0 | 15.8 | 12.8 | 10.1 | 11.5 | 17.3 |
| elongation at break, % | | 249 | 358 | 90 | - | 425 | 384 | 342 | 227 | 265 | 463 |
| tensile stress at break, MPa elongation at break, % | 1000 | 17.9 | 13.7 | 6.2 | 14.5 | 15.2 | 11.7 | 8.2 | 8.4 | 8.4 | 10.7 |
| | | 232 | 284 | 13 | 340 | 353 | 303 | 130 | 132 | 102 | 289 |
| tensile stress at break, MPa | 1500 | 17.1 | 14.6 | 4.2 | - | 13.8 | 12.6 | 8.3 | 8.2 | 8.1 | 9.0 |
| elongation at break, % | | 221 | 306 | 11 | - | 329 | 323 | 101 | 93 | 106 | 261 |
| tensile stress at break, MPa | 2000 | 16.9 | 14.1 | 6.1 | 5.1 | 10.2 | 8.4 | 7.1 | 7.7 | 7.7 | 8.2 |
| elongation at break, % | | 219 | 295 | 10 | 98 | 232 | 184 | 60 | 72 | 44 | 148 |

The elongation at break of the tapes as listed in Table 4 are illustrated in Figure 2. It can be seen that the comparative example CE1 without any UV stabilization show strong deterioration.

Examples IE3, IE4 and IE5 having an end concentration of the UV stabilizer of 0.33 wt% show better UV stability compared to CE1.

Examples IE1, IE2 and IE6 having an end concentration of the UV stabilizer of 1.0 wt% show the best UV stability in the range of the reference example RE1 and RE2 irrespective of the titanium dioxide species. Examples IE1 and IE2 including the non-coated titanium dioxide species Hombitan LW-S thereby how slightly better UV stability than example IE6 including the coated titanium dioxide species Hombitan LO-CR-K irrespective of the titanium dioxide content.

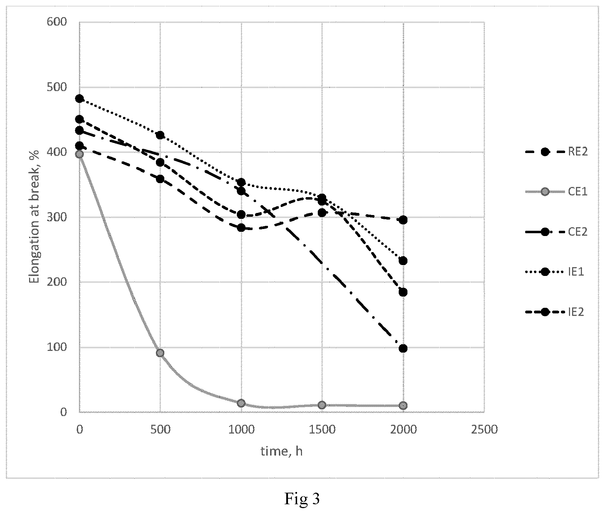

When comparing the UV stability as elongation at break of the weathered tapes of IE1 and IE2 with comparative examples CE1 and CE2 (including 1 wt% UV stabilizer but no titanium dioxide) and reference example RE2 in Figure 3 it can be seen that the combination of UV stabilizer and titanium dioxide show a synergistic effect and a better UV stability than comparative example CE2.

## Claims

1. A polyolefin composition comprising
(A) a cross-linkable polyolefin with hydrolysable silane groups
(B) an acidic silanol condensation catalyst
(C) titanium dioxide, and
(D) at least one UV stabilizer selected from UV stabilizers according to one or more of formula (I), (II) and/or (III) 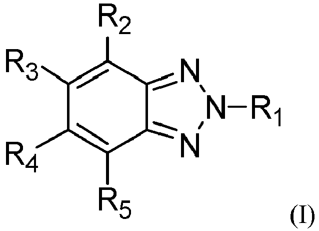 with
R₁ being a substituted or non-substituted hydrocarbon residue with at least 6 carbon atoms; and
R₂, R₃, R₄ and R₅ independently being the same or different substituted or non-substituted hydrocarbon residues, hydrogen atoms or hetero atoms; 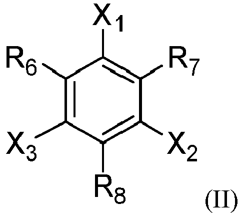 with
R₆ and R₇ being independently the same or different non—substituted or substituted aliphatic or aromatic hydrocarbon residues which independently may comprise hetero atoms, with R₈ being any substituent, and with X₁, X₂, and X₃ independently being H or OH, with the proviso that at least one of X₁, X₂ and X₃ is OH; 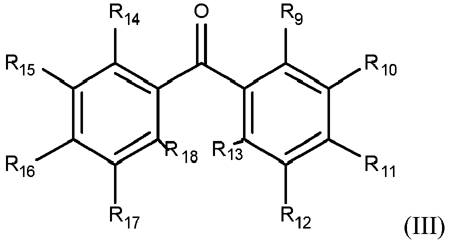
with
R₉ to R₁₈ being any substituent, preferably R₉ to R₁₈ being independently the same or different hetero atoms, substituted or non-substituted hydrocarbon residues, which may comprise hetero atoms, or hydrogen atoms with the proviso that at least one of R₉ to R₁₈ is OH;
more preferably R₉ to R₁₈ being independently the same or different hetero atoms, substituted or non-substituted hydrocarbon residues, which may comprise hetero atoms, or hydrogen atoms with the proviso that at least one of R₉ to R₁₃ is OH.

2. The polyolefin composition according to claim 1, wherein component (D) is present in an amount of from 0.10 to 3.00 wt%, more preferably 0.35 to 2.00 wt%, most preferably 0.75 to 1.50 wt%, based on the total weight amount of the polyolefin composition.

3. The polyolefin composition according to claims 1 or 2, wherein component (D) is selected from UV stabilizers of formula (I).

4. The polyolefin composition according to any one of the preceding claims, wherein component (C) is present in an amount of from 0.10 to 3.00 wt%, more preferably 0.20 to 2.00 wt%, most preferably 0.35 to 1.50 wt%, based on the total weight amount of the polyolefin composition.

5. The polyolefin composition according to any one of the preceding claims, wherein component (C) comprises anatase titanium dioxide particles and preferably consists of anatase titanium dioxide particles.

6. The polyolefin composition according to any one of the preceding claims, wherein component (C) comprises non-surface-coated titanium dioxide particles and is present in an amount of from 0.10 to 3.00 wt%, more preferably 0.20 to 1.50 wt%, most preferably 0.35 to 0.75 wt%, and component (D) is present in an amount of from 0.60 to 3.00 wt%, more preferably 0.75 to 2.00 wt%, most preferably 0.85 to 1.50 wt%, all based on the total weight amount of the polyolefin composition.

7. The polyolefin composition according to any one of claims 1 to 5, wherein component (C) comprises titanium dioxide particles, which are surface-coated with a coating, which does not comprise silica, and is present in an amount of from 0.10 to 0.95 wt%, more preferably 0.20 to 0.85 wt%, most preferably 0.35 to 0.75 wt%, and component (D) is present in an amount of from 0.60 to 3.00 wt%, more preferably 0.75 to 2.00 wt%, most preferably 0.85 to 1.50 wt%, all based on the total weight amount of the polyolefin composition.

8. The polyolefin composition according to any one of the preceding claims, wherein component (B) comprises an organic sulfonic acid comprising 10 to 200 carbon atoms, the sulfonic acid further comprising at least one aromatic group, preferably an organic sulfonic acid with the structural element (VI)
Ar(SO₃H)_{X} (VI)
with
Ar being an aryl groups, which may be substituted or non-substituted and
x being at least 1,
more preferably in the structural element (II) Ar is substituted with at least one C₁ to C₃₀-hydrocarbyl group, still more preferably a C₄ to C₃₀ alkyl group.

9. The polyolefin composition according to any one of the preceding claims, wherein component (B) is present in an amount of from 0.001 to 2.00 wt%, more preferably 0.005 to 1.00 wt%, based on the total weight amount of the polyolefin composition.

10. The polyolefin composition according to any one of the preceding claims, wherein component (A) comprises a polyethylene with hydrolysable silane groups.

11. The polyolefin composition according to any one of the preceding claims, wherein component (A) comprises hydrolysable silane groups in an amount of from 0.001 to 15.0 wt%, preferably from 0.01 to 5.0 wt%, more preferably from 0.1 to 2.5 wt% and most preferably from 0.4 to 1.5 wt%, based on the total weight of component (A).

12. The polyolefin composition according to any one of the preceding claims having a tensile stress at break of at least 6.5 MPa, more preferably at least 7.0 MPa, most preferably at least 8.0 MPa and/or an elongation at break of at least 25%, more preferably at least 50%, most preferably at least 125%, when measured on 1.8 mm thick tapes according to ISO 527-1:2012 at 23°C and 50% relative humidity at a speed of 50 mm/min after exposure to weathering conditions according to ISO 4892-2:2013 for 2000 h.

13. An article comprising the polyolefin composition according to any one of the preceding claims.

14. The article according to claim 13 being a pipe, a wire, a cable or a film, more preferably a cable, most preferably a low voltage cable.

15. Use of a polyolefin composition according to any one of claims 1 to 12 for the production of an article, preferably the production of a film, a layer of a wire or a layer of a cable, most preferably the insulation layer of a low voltage cable.
